# EUROPEAN PATENT APPLICATION

(11) **EP 4 411 135 A1**
(43) Date of publication of application: **07.08.2024**
(21) Application number: 23154396.8
(22) Date of filing: 01.02.2023
(51) Int. Cl.: F03D 17/00, F03D 80/30

(54) **LIGHTNING DETECTION SYSTEM, WIND TURBINE AND A METHOD TO DETECT A LIGHTNING STRIKE POSITION AND THE LIGHTNING STRENGTH AT A WIND TURBINE**

(71) Applicant: Siemens Gamesa Renewable Energy A/S, 7330 Brande (DK)
(72) Inventor: Jensen, Henrik Abild, 8541 Studstrup (DK)
(74) Representative: SGRE-Association

(57) **Abstract**

The invention relates to lightning detection system (10) for detecting a lightning strike position and a lightning strength for a wind turbine (11), comprising:
A lightning sensor unit (12) for detecting lightning strikes and collecting lightning data (27) of said lightning strikes, said lightning sensor unit (12) being mountable on a tower (13) of the wind turbine (11);
at least one lightning strike counter (14) for collecting strike data (28) on a lightning strike count and a lightning strike time, when the energy of the lightning strike exceeds a certain threshold value, said at least one lightning strike counter (14) being mountable on a down conductor (15) on at least one blade (16) of the wind turbine (11);
a processing unit (17) for collecting the lightning data (27) of the lightning sensor unit (12) and the strike data (28) of the at least one lightning strike counter (14) for processing the data to determine the position of the lightning strike.

## Description

The invention relates to a lightning detection system, a wind turbine and a method to detect a lightning strike position and the lightning strength at a wind turbine.

Until today, wind turbines have been operated with the following types of Lightning Detection Systems:
A basic system, comprising a lightning card, which, for example, is mounted on a wire placed in the blade,
a first advanced System, which comprises a Lightning Detection Sensor mounted on a wire in the blade combined with a turbine controller to process the data measured by the sensor,
a second Advanced System, comprising a Lightning Detection Sensor mounted on/around the Tower (ground level), combined with a turbine controller to process the data measured by the sensor.

The disadvantage is that these systems can provide information about the lightning strike, but this information is general and cannot provide data about the area or the exact location of the strike.

This requires maintenance and inspection runs to be carried out on a tighter schedule so that damage can be detected and remedied at an early stage.

It is the object of the present invention to at least partially solve the above-described disadvantages. In particular, it is the object of the present invention to provide a lightning detection system that enables a coarser maintenance and inspection procedure by optimizing lightning detection. The above object is achieved by a lightning detection system having the features of claim 1, by a wind turbine having the features of claim 9 and a method to detect a lightning strike position and the lightning strength at a wind turbine having the features of claim 12. Further features and details of the invention result from the sub claims, the description and the drawings. Features and details described in connection with the lightning detection system according to the invention naturally also apply in connection with the wind turbine according to the invention and/or the method according to the invention and vice versa in each case, so that reference is or can always be made mutually with respect to the disclosure of the individual aspects of the invention.

According to a first aspect, the present invention discloses a lightning detection system for detecting a lightning strike position and a lightning strength for a wind turbine, comprising:
a lightning sensor unit for detecting lightning strikes and
collecting lightning data of said lightning strikes, said lightning sensor unit being mountable on a tower of a wind turbine;
at least one lightning strike counter for collecting a strike data on a lightning strike count and a lightning strike time, when the energy of lightning strike exceeds a certain threshold value, said at least one lightning strike counter being mountable on a down conductor on at least one blade of the wind turbine;
a processing unit for collecting the lightning data of the lightning sensor unit and the strike data of the at least one lightning strike counter for processing the data to determine the position of the lightning strike.

The lightning sensor unit is mountable on the tower, especially on the tower base. Further, it is possibly advantageous if the lightning sensor is continuously sampling the magnetic field near the tower of the wind turbine.

In order to determine at which position the lightning has struck, it is advantageous if the processing unit compares the time stamps of the lightning data with the time stamps of the strike data when one or more lightning strikes occur or have occurred. This can be used to determine whether the lightning strike has occurred on the at least one blade or on the tower.

On the basis of this information, i.e., the information about the lightning strike and the position of the impact of the lightning strike, it can be determined whether an on-site check is necessary or can be carried out later.

Furthermore, it is conceivable that the process unit is installed in the lightning sensor unit and has a display via which data can be read during a control run or via which access to the individual sensors mounted on the wind turbine is possible, in order to be able to i.e., check their functioning.

Furthermore, any necessary maintenance measures can be better planned on the basis of the recorded data on the lightning strike. This is possible because it is now possible to track how often lightning strikes the same position and how strong said lightning was.

Accordingly, a cost- and time-efficient maintenance and control of the individual wind turbines is achievable.

It may be advantageous if a number of lightning strike counters is provided, whereby at least one lightning strike counter is mountable on each blade of the wind turbine.

This allows a determination of which blade was struck by the lightning by the processing unit. As a result, control and maintenance can now be carried out depending on a certain number of lightning strikes at one location or lightning strike counter positions. For example, if the wind turbine has three blades, at least one lightning strike counter can be provided on each blade. If lightning strikes during one or more thunderstorms, the number of lightning strikes on the respective blades may differ. For example, 10 lightning strikes may have occurred on one wing and only 2 on the other two wings, so that the wing with the higher number of lightning strikes must be checked more quickly.

It may be advantageous if at least one lightning strike counter is mountable on a down conductor on a hub of the wind turbine and/or on a down conductor on a nacelle of the wind turbine and/or on a down conductor of a weather station of the wind turbine and/or on a down conductor on the tower or the tower of the wind turbine.

In this way, lightning currents may be measured and/or detected in the blade, hub, generator, in the nacelle or any other component made of metallic or other electrical current conducting material.

The towers can be made of metal, such as a tubular tower or a lattice tower. These are usually by themselves a conductor for the lightning. A tower made from concrete usually has a reinforcement made from metal. The down conductor in these towers can be the reinforcement and/or a down conductor cable.

It may be advantageous if the at least one lightning strike counter has a fiber optical output for remote monitoring and collecting the strike data by the processing unit.

This enables an easy data communication to provide the data of the lightning strike counters to the process unit.

It may be advantageous if the threshold value of the lightning strike counter to count a lightning strike is at least 2 kA.

This means that only lightning strikes with a certain force or current are counted as a lightning strike. The level of the decisive current intensity is selected in such a way that even minor lightning strikes that do not cause any damage are perceived as lightning strikes. Is case a signal is triggered, such as a current stroke with a value over the threshold is detected, it is then, by the processing unit, compared to the data collected by the lightning sensor unit to evaluate or calculate the next inspection run.

It may be advantageous if the lightning sensor unit is designed to detect the following data:
peak current,
rise time,
charge,
specific energy,
full waveform recording,
receptor mass loss/damage.

On the basis of this data collected by the lightning sensor unit, more information can be gathered to evaluate the status quo of a wind turbine after a thunderstorm. The status quo then leads to an efficient planning of maintenance and control runs.

It may be advantageous if the lightning sensor unit comprises a Rogowski coil.

The Rogowski coil is an electrical device for measuring alternating current (AC) or high-speed current pulses. It sometimes consists of a helical coil of wire with the lead from one end returning through the center of the coil to the other end so that both terminals are at the same end of the coil.

Therefore, the Rogowski coil is a very accurate lightning sensor and is advantageously used as a sensor in the lightning sensor unit. The base of the tower is the most advantageous positioning.

It may be advantageous if the processing unit is designed to forward the collected and processed data to an external computer system and/or cloud system.

This makes it possible to access the data of the respective process unit in a simple way. Furthermore, the storage allows an evaluation both ad hoc and over a longer period of time in order to be able to plan and adjust the control and maintenance periods.

According to a second aspect, the present invention discloses a wind turbine comprising at least three blades, a hub, a nacelle and a tower, and a lightning detecting system as described above, whereby the lightning sensor unit is mounted on the tower, and whereby at least one lightning strike counter is mounted on each of the blades. The advantages described in detail for the lightning detecting system according to the first aspect of the invention apply equally to the wind turbine according to the second aspect of the invention.

A lightning strike counter may be installed on each blade, the hub, the nacelle and the tower. Therefore, at least the at least three blades, the hub and the nacelle comprise a down conductor to divert the current. Several lightning strike counters can be provided on the nacelle, for example at a transition from the nacelle to the hub or to the tower, or on one of the side walls or the backend or in the area of the weather station.

The towers can be made of metal, such as a tubular tower or a lattice tower. These are usually by themselves a conductor for the lightning. A tower made from concrete usually has a reinforcement made from metal. The down conductor in these towers can be the reinforcement and/or a down conductor cable.

The lightning sensor unit may be mounted in the tower base.

In particular, at least one lightning strike counter is mounted on a down conductor on a hub of the wind turbine and/or on a down conductor on a nacelle of the wind turbine and/or on a down conductor a weather station of the wind turbine and/or on a down conductor on the tower or the tower of the wind turbine.

The presence of a down conductor on which the at least one lightning strike counter can be positioned ensures the metallic conductor available to dissipate and measure the lightning strike. If the current of the lightning is above the threshold value, the lightning strike counter counts the lightning strike and transmits the data to the processing unit. The transmitting may be carried out via a fiber optical output.

It may be advantageous if the processing unit is mounted on the tower or the tower base or is integrated in the lighting sensor unit to forward the collected and processed data to an external computer system and/or cloud system.

Mounting the lightning sensor unit in the lower part of the tower gives it protection from external forces. Furthermore, it is conceivable that the process unit is installed in the lightning sensor unit and has a display via which data can be read during a control run or via which access to the individual sensors mounted on the wind turbine is possible in order to be able to check their functioning.

According to a third aspect, the present invention discloses a method to detect a lightning strike position and the lightning strength at a wind turbine as described above with a lightning detection system as described above comprising the following steps:
Detecting lightning strikes and collecting lightning data of said lightning strikes with the lightning sensor unit to detect the lightning strength;
counting lightning strikes by collecting strike data when the energy of lightning strike exceeds a certain threshold value with the at least one lightning strike counter;
collecting the lightning data collected by the lightning sensor unit and the strike data counted by the at least one lightning strike counter and processing said data to determine the position and the strength of the lightning strike at the wind turbine with the processing unit.

The advantages described in detail for the lightning detecting system according to the first aspect of the invention and the wind turbine according to the second aspect of the invention apply equally to the method to detect a lightning strike position and the lightning strength at a wind turbine according to the third aspect of the invention.

Counting means that the respecting lightning strike counter is sending a signal that a lightning strike occurred to the processing unit.

It may be advantageous if the processing unit processes the data by associating the strike data with the lightning data, especially with the lightning strike time.

Based on the recorded and stored lightning data and strike data, the process unit can assign a lightning strike and the lightning data of the lightning sensor unit to a specific lightning strike counter. This can be determined, for example, via the time stamp of both sensors. The data of the current level, the energy and the number of lightning strikes that have already occurred at this specific lightning strike counter can be correlated with each other. This can provide information on the status and condition of the position of the lightning strike counter, in order to be able to further plan the maintenance and inspection intervals and optimize their intervals.

It may be advantageous if the lightning sensor unit detects the following data of the lightning strike:
peak current,
rise time,
charge,
specific energy,
full waveform recording,
receptor mass loss/damage.

It may be advantageous if the data processed by the processing unit is forwarded to an external computer system and/or cloud system.

This makes it possible to access the data of the respective process unit in a simple way. Furthermore, the storage allows an evaluation both ad hoc and over a longer period of time in order to be able to plan and adjust the control and maintenance periods.

Further measures improving the invention result from the following description of some examples of implementation of the invention, which are shown schematically in the figures. All features and/or advantages arising from the claims, the description or the drawings, including constructional details, spatial arrangements and process steps, may be essential to the invention both individually and in the various combinations. It should be noted that the figures are descriptive only and are not intended to limit the invention in any way.

They show schematically:
- Fig. 1: a lightning detection system;
- Fig. 2: a wind turbine with a lightning detection system;
- Fig. 3: a method to detect a lightning strike position and the lightning strength.

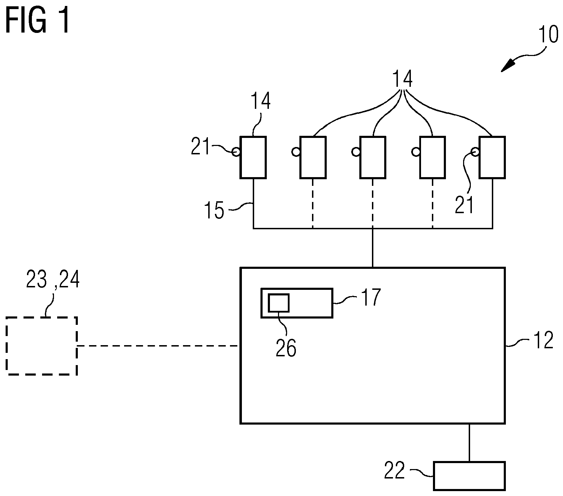

Fig. 1 shows a lightning detection system 10 for detecting a lightning strike position and a lightning strength for a wind turbine 11 comprising:
- A lightning sensor unit 12 for detecting lightning strikes and collecting lightning data 27 of said lightning strikes, said lightning sensor unit 12 being mountable on a tower 13 of the wind turbine 11;
- at least one lightning strike counter 14 for collecting a strike data 28 on a lightning strike count and a lightning strike time, when the energy of lightning strike exceeds a certain threshold value, said at least one lightning strike counter 14 being mountable on a down conductor 15 on at least one blade 16 of the wind turbine 11;
- a processing unit 17 for collecting the lightning data 27 of the lightning sensor unit 12 and the strike data 28 of the at least one lightning strike counter 14 for processing the data to determine the position of the lightning strike.

The illustrated embodiment shows at least two lightning strike counters 14. However, as indicated, a number of lightning strike counters 14 can also be provided, whereby at least one lightning strike counter 14 is mountable on each blade 16 of the wind turbine 11.

As already indicated in fig. 1., further lightning strike counters 14 are provided, which are mountable on a down conductor 15 on a hub 18 of the wind turbine 11 and/or on a down conductor 15 on a nacelle 19 of the wind turbine 11 and/or on a down conductor 15 of a weather station 20 of the wind turbine 11 and/or on a down conductor 15 on the tower 13 or the tower 13 of the wind turbine 11.

For remote monitoring and collecting the strike data 28 of the at least one lightning strike counter 14 by the processing unit 17, the at least one lightning strike counter 14 has a fiber optical output 21.

The lightning strike counters 14 are designed in such a way that they only count lightning when a threshold value is exceeded, whereby the threshold value is at least 2 kA.

The lightning sensor unit 12 is designed to detect the following data:
- peak current,
- rise time,
- charge,
- specific energy,
- full waveform recording,
- receptor mass loss/ damage.

For accurate measurement of the data by means of the lightning sensor unit 12, it has a Rogowski coil 22 as the lightning sensor of the lightning sensor unit 12.

In addition, the processing unit 17 is designed to forward the collected and processed lightning 27 data and strike data 28 to an external computer system 23 and/or a cloud system 24.

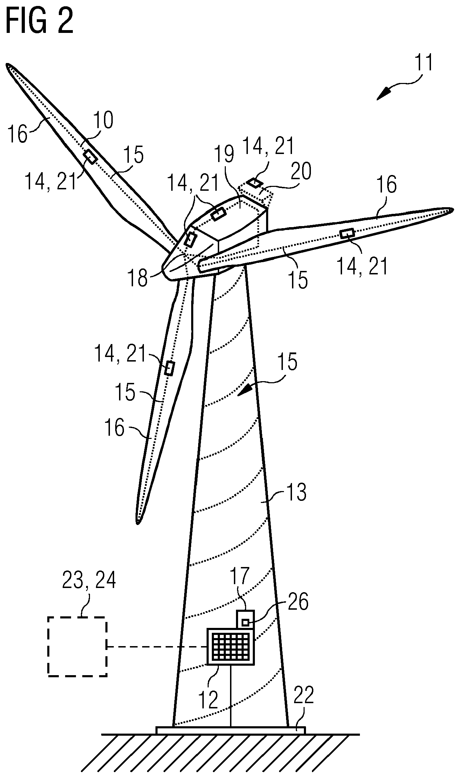

Fig. 2 shows a wind turbine 11 comprising at least three blades 16, a hub 18, a nacelle 19 and a tower 13, and a lightning detection system 10 according to fig. 1, whereby the lightning sensor unit 12 is mounted on the tower 13, and whereby at least one lightning strike counter 14 is mounted on each of the blades 16, especially a down conductor 15 of each of the at least three blades 16.

In addition, at least one lightning strike counter 14 is mounted on a down conductor 15 on a hub 18 of the wind turbine 11 and on a down conductor 15 on a nacelle 19 of the wind turbine 11 and on a down conductor 15 of a weather station 20 of the wind turbine 11 or the tower 13 of the wind turbine 11. Since the wind turbine 11 shown in fig. 2 is a wind turbine 11 with a tubular tower 13 made of metal, the entire tower 13 is the down conductor. In case the tower 13 is made from concrete, it could be necessary to provide a down conductor cable.

The processing unit 17 is integrated in the lighting sensor unit 12 to forward the collected and processed data to an external computer system 23 and/or a cloud system 24. The Rogowski coil 22 is provided on the tower base 25 of the wind turbine 11 in order to be able to measure the lightning strike data 28 accurately and reliably.

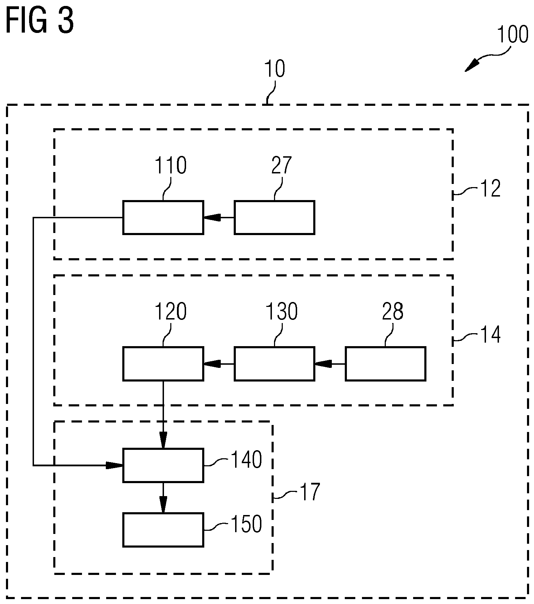

Fig. 3 shows a method 100 to detect a lightning strike position and the lightning strength at a wind turbine 11 according to fig. 2 with a lightning detection system 10 according to fig. 1, comprising the following steps:
- Detecting 110 lightning strikes and collecting 130 lightning data 27 of said lightning strikes with a lightning sensor unit 12 to detect the lightning strength;
- counting 120 lightning strikes by collecting 130 strike data 28 when the energy of the lightning strike exceeds a certain threshold value with the at least one lightning strike counter 14;
- collecting 140 the lightning data 27 collected by the lightning sensor unit 12 and the lightning strike data 28 counted by the at least one lightning strike counter 14 and processing 150 said data to determine the position and the strength of the lightning strike at the wind turbine 11 with the processing 140 unit 17.

In a further step, the processing unit 17 processes 150 the data by associating the strike data 28 with the lightning data 27, especially with the lightning strike time.

The lightning sensor unit 12, especially the Rogowski coil 22 used as the lightning sensor, detects the following data of the lightning strike:
- peak current,
- rise time,
- charge,
- specific energy,
- full waveform recording,
- receptor mass loss/damage.

In a further step, the data processed by the processing 150 unit 17 is forwarded 160 to an external computer system 23 and/or cloud system 24.

Via the display 26 of the processing unit 17, the lightning data 27 and/or strike data 28 can be read during a control run, or an access to the individual sensors, e.g., the lightning strike counters 14 or the Rogowski coil 22, mounted on the wind turbine 11, is possible in order to be able to check their functioning.

## Claims

1. Lightning detection system (10) for detecting a lightning strike position and a lightning strength for a wind turbine (11), comprising:
a lightning sensor unit (12) for detecting lightning strikes and collecting lightning data (27) of said lightning strikes,
said lightning sensor unit (12) being mountable on a tower (13) of the wind turbine (11);
at least one lightning strike counter (14) for collecting strike data (28) on a lightning strike count and a lightning strike time, when the energy of the lightning strike exceeds a certain threshold value, said at least one lightning strike counter (14) being mountable on a down conductor (15) on at least one blade (16) of the wind turbine (11);
a processing unit (17) for collecting the lightning data (27) of the lightning sensor unit (12) and the strike data (28) of the at least one lightning strike counter (14) for processing the data to determine the position of the lightning strike.

2. Lightning detection system (10) according to claim 1, **characterized in that**
a number of lightning strike counters (14) is provided, whereby at least one lightning strike counter (14) is mountable on each blade (16) of the wind turbine (11).

3. Lightning detection system (10) according to claim 1 or 2, **characterized in that**
at least one lightning strike counter (14) is mountable on a down conductor (15) on a hub (18) of the wind turbine (11) and/or on a down conductor (15) on a nacelle (19) of the wind turbine (11) and/or on a down conductor (15) of a weather station (20) of the wind turbine (11) and/or on a down conductor (15) on the tower (13) or the tower (13) of the wind turbine (11).

4. Lightning detection system (10) according to one of the preceding claims,
**characterized in that**
the at least one lightning strike counter (14) has a fiber optical output (21) for remote monitoring and collecting the counted lightning strikes by the processing unit (17).

5. Lightning detection system (10) according to one of the preceding claims,
**characterized in that**
the threshold value of the lightning strike counter (14) to count a lightning strike is at least 2 kA.

6. Lightning detection system (10) according to one of the preceding claims,
**characterized in that**
the lightning sensor unit (12) is designed to detect the following data:
peak current,
rise time,
charge,
specific energy,
full waveform recording,
receptor mass loss/damage.

7. Lightning detection system (10) according to one of the preceding claims,
**characterized in that**
the lightning sensor unit (12) comprises a Rogowski coil (22).

8. Lightning detection system (10) according to one of the preceding claims,
**characterized in that**
the processing unit (17) is designed to forward the collected and processed data to an external computer system (23) and/or cloud system (24).

9. Wind turbine (11) comprising at least three blades (16), a hub (18), a nacelle (19) and a tower (13), and a lightning detection (10) system according to one of the claims 1 to 8, whereby the lightning sensor unit (12) is mounted on the tower (13) and whereby at least one lightning strike counter (14) is mounted on each of the blades (16).

10. Wind turbine (11) according to claim 9,
**characterized in that**
at least one lightning strike counter (14) is mounted on a down conductor (15) on each of the at least three blades (16) and/or on a down conductor (15) on a hub (18) of the wind turbine (11) and/or on a down conductor (15) on a nacelle (19) of the wind turbine (11) and/or on a down conductor (15) of a weather station (20) of the wind turbine (11) and/or on a down conductor (15) on the tower (13) or the tower (13) of the wind turbine (11).

11. Wind turbine (11) according to claim 9 or 10,
**characterized in that**
the processing (140) unit (17) is mounted on the tower (13) or the tower (13) base or is integrated in the lighting sensor unit (12) to forward the collected and processed data to an external computer system (23) and/or cloud system (24).

12. Method (100) to detect a lightning strike position and the lightning strength at a wind turbine (11) according to claim 9 to 11 with a lightning detection system (10) according to claims 1 to 8, comprising the following steps:
detecting (110) lightning strikes and collecting (130) lightning data (27) of said lightning strikes with the lightning sensor unit (12) to detect the lightning strength;
counting (120) lightning strikes by collecting (130) strike data (28) when the energy of the lightning strike exceeds a certain threshold value with the at least one lightning strike counter (14);
collecting (140) the lightning data (27) collected by the lightning sensor unit (12) and the strike data (28) counted by the at least one lightning strike counter (14) and processing (150) said data to determine the position and the strength of the lightning strike at the wind turbine (11) with the processing (140) unit (17).

13. Method (100) according claim 12,
**characterized in that**
the processing unit (17) processes (150) the data by associating the strike data (28) with the lightning data (27), especially by lightning strike time.

14. Method (100) according to claim 12 or 13,
**characterized in that**
the lightning sensor unit (12) detects the following data of the lightning strike:
peak current,
rise time,
charge,
specific energy,
full waveform recording,
receptor mass loss/damage.

15. Method (100) according to one of the preceding claims 12 to 14,
**characterized in that**
the data processed by the processing (150) unit (17) is forwarded (160) to an external computer system (23) and/or cloud system (24).
